# EUROPÄISCHE PATENTANMELDUNG

(11) **EP 2 565 854 A1**
(43) Veröffentlichungstag der Anmeldung: **06.03.2013**
(21) Anmeldenummer: 12194439.1
(22) Anmeldetag: 18.02.2010
(51) Int. Cl.: G07F 15/00, B60L 11/18, B60L 15/20, G07B 15/00

(54) **Anlage zum elektrischen Laden von Fahrzeugen**

(62) Teilanmeldung aus: 10450022.8
(71) Anmelder: Kapsch TrafficCom AG, 1120 Wien (AT)
(72) Erfinder: Nagy, Oliver, 1190 Wien (AT)
(74) Vertreter: Weiser, Andreas

(57) **Zusammenfassung**

Anlage zum elektrischen Laden von Fahrzeugen (3), denen individuelle, jeweils mit einer fahrzeugspezifischen Identifikation ausgestattete, fahrzeugfeste Funkeinheiten (13) zugeordnet sind, umfassend:
eine Mehrzahl von Stellplätzen (2) für je ein Fahrzeug (3),
für jeden Stellplatz (2) jeweils eine Ladestation (4) zum kabelgebundenen Laden eines darauf befindlichen Fahrzeugs (3) über ein Ladekabel (6), und
für jeden Stellplatz (2) jeweils einen mit dessen Ladestation (4) in Verbindung stehenden Sendeempfänger (9), welcher die Ladestation (1) des Stellplatzes (2) abhängig von einer Kommunikation (14) mit der Funkeinheit (13) eines darauf befindlichen Fahrzeugs (3) unter Austausch der genannten Identifikation für den Ladevorgang freischaltet,
wobei jeder Sendeempfänger (9) eine auf den Bereich seines Stellplatzes (2) beschränkte Kommunikationszone (12) hat.

## Beschreibung

Die vorliegende Erfindung betrifft eine Anlage zum elektrischen Laden von Fahrzeugen, denen individuelle Funkeinheiten zugeordnet sind.

Aus der DE 103 04 284 A1 ist eine solche Anlage mit einem einzigen Stellplatz für ein Fahrzeug, einer dem Stellplatz zugeordneten Ladestation zum kabelgebundenen Laden eines darauf befindlichen Fahrzeugs über ein Ladekabel und einem mit der Ladestation in Verbindung stehenden Sendeempfänger zur Kommunikation mit einer Funkeinheit bekannt, wobei der Sendeempfänger die Ladestation abhängig von der Kommunikation mit der Funkeinheit für den Ladevorgang freischaltet.

Weitere derartige Anlagen sind in der US 2009/0174365 A1 oder der US 2009/0177580 A1 beschrieben. Gemäß dem aus diesen Schriften bekannten Stand der Technik werden die Betreiber der Fahrzeuge mit Funkeinheiten ausgestattet, beispielsweise RFID-Transpondern, wie sie zur Bezahlung von Mautgebühren nach dem kalifornischen FasTrak^{®}-System verwendet werden. Diese Lösung hat den Nachteil, daß eine eindeutige Zuordnung zwischen dem von der Anlage aufgeladenen Fahrzeug einerseits und einem durch die Funkeinheit des Benutzers referenzierten Verrechnungskonto in einem Zentralsystem anderseits nicht gewährleistet ist, weil die Beziehung nur zwischen der Anlage und dem Benutzer besteht. So könnte beispielsweise ein anderes Fahrzeug auf Kosten des Benutzers geladen werden, oder ein Benutzer für das Laden eines anderen Fahrzeugs zur Kasse gebeten werden.

In der genannten DE 103 04 284 A1 ist beschrieben, bei Anlagen mit mehreren Stellplätzen und Ladestationen kabelgebundene Datenübertragungsstrecken zu verwenden, welche das Ladekabel der jeweiligen Ladestation mitverwenden, um eine eindeutige Zuordnung zum aufgeladenen Fahrzeug sicherzustellen, was die Vorteile der Funktechnologie, wie eine einfache Umrüstung bestehender Fahrzeuge durch bloßes Mitführen von Funkeinheiten, wieder zunichte macht.

Die Erfindung setzt sich zum Ziel, die Nachteile des geschilderten Standes der Technik zu überwinden und eine Anlage zum Laden von Elektrofahrzeugen zu schaffen, welche eine erhöhte Betriebssicherheit besitzt.

Dieses Ziel wird mit einer Anlage der einleitend genannten Art erreicht, die sich gemäß der Erfindung durch die Merkmale des Anspruchs 1 auszeichnet. Auf diese Weise wird eine zwingende Zuordnung zwischen dem zu ladenden Fahrzeug und der Funkeinheit erreicht, sodaß jeglicher Mißbrauch konstruktiv ausgeschlossen ist ("security by design").

Eine besonders vorteilhafte Ausführungsform der Erfindung zeichnet sich dadurch aus, daß der Sendeempfänger in der Art einer Funkbake zur Kommunikation mit Funkeinheiten ausgebildet ist, die fahrzeugfeste OBUs eines drahtlosen Straßenmautsystem sind. Durch Verwendung fahrzeugfester OBUs (Onboard-Units) kann die Fahrzeugbindung und Fahrzeugzuordnung beim Ladevorgang zusätzlich verstärkt werden. Darüber hinaus kann in äußerst vorteilhafter Weise auf die bestehende Infrastruktur von drahtlosen Straßenmautsystemen mit vorhandenen OBUs zurückgegriffen werden, um rasch ein flächendeckendes Stromtankstellennetz für Elektrofahrzeuge zu errichten oder Parkplätze, Parkhäuser usw. rasch mit Ladeanlagen für alle Stellplätze auszustatten.

Dazu ist es besonders günstig, wenn der Sendeempfänger eine Bake nach dem DSRC- (Dedicated Short Range Communication) oder WAVE- (Wireless Access in a Vehicle Environment) -Standard zur Kommunikation mit standardisierten DSRC- oder WAVE-OBUs ist.

Gemäß einem weiteren Merkmal der Erfindung können die elektrischen Ladeparameter des Ladevorgangs auf Grundlage von Daten gesteuert sein, die der Sendeempfänger aus der Funkeinheit ausliest. Diese Daten können die elektrischen Ladeparameter, z.B. Ladestrom, Ladespannung, Ladekennlinie usw., direkt angeben oder können auf solche in einem Zentralrechner für diese Funkeinheit hinterlegte Ladeparameter verweisen.

In einer weiteren bevorzugten Ausgestaltung der Erfindung ist die Anlage mit einer auf den Stellplatz gerichteten Kamera ausgestattet und die Ladestation steuert Anfang und am Ende des Ladevorgangs und/oder bei einer Unterbrechung, Störung oder Abweichung des Ladevorgangs von einem vorgegebenen Verlauf die Kamera zur Bildaufnahme an, oder es wird dazu die Störung der Abschirmung eines geschirmten Ladekabels detektiert. Dadurch kann die Betrugs- und Manipulationssicherheit weiter erhöht werden. Beispielsweise kann so ein betrügerisches Umstecken des Ladekabels von einem Fahrzeug auf ein anderes mittels Beweisphotos geahndet bzw. automatisch detektiert werden oder Manipulationsversuch am Ladekabel bereits im Ansatz erkannt werden.

In der vorteilhaften Variante der Integration in ein Straßenmautsystem sendet die Anlage bevorzugt Transaktionen über Ladevorgänge an eine Zentrale des Straßenmautsystems, sodaß diese abgerechnet oder bei Abweichungen entsprechende Maßnahmen im Rahmen des Straßenmautsystems getroffen werden können.

Die Erfindung wird nachstehend anhand der beigeschlossenen Zeichnungen näher erläutert. In den Zeichnungen zeigen:
die Fig. 1 und 2 zwei verschiedene Anlagen in einer schematischen Perspektivansicht; und
Fig. 3 eine der Anlagen von Fig. 1 in einer blockschaltbildlichen Seitenansicht im Detail.

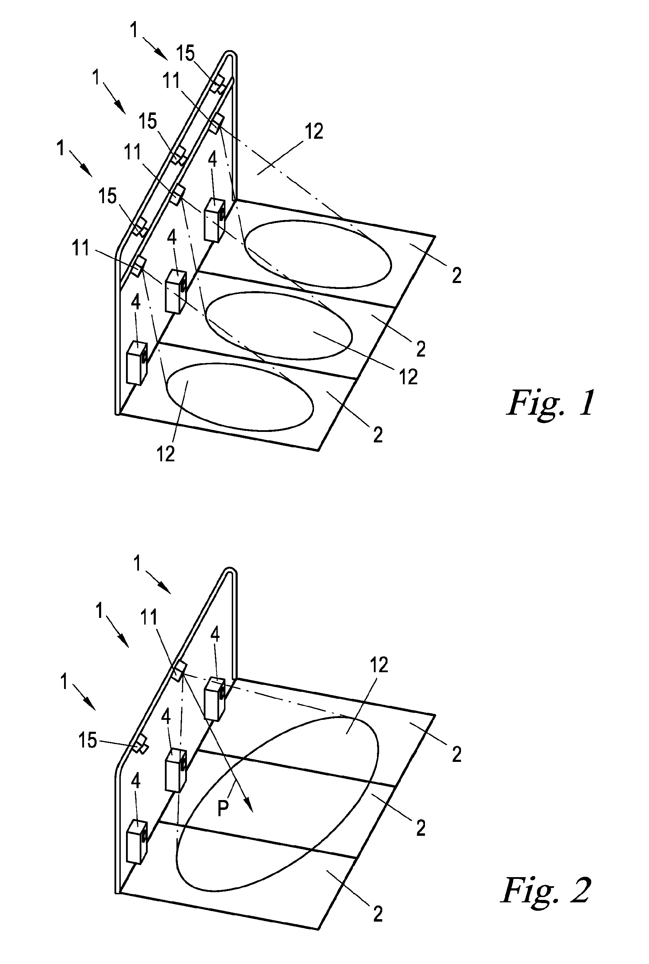

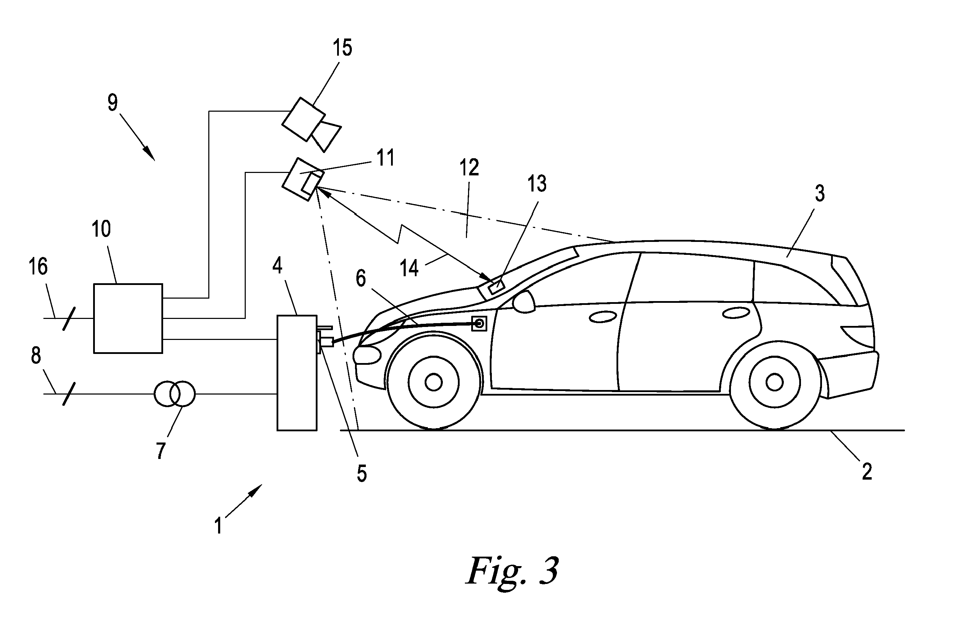

In Fig. 1 sind drei beispielhafte Anlagen 1 zum elektrischen Laden von Elektro- oder Hybridfahrzeugen gezeigt. Jede Anlage 1 umfaßt einen Stellplatz 2 für ein Fahrzeug 3 (Fig. 3) sowie eine dem Stellplatz 2 zugeordnete Ladestation 4 zum Laden des Fahrzeugs. Die Ladestation 4 ist herkömmlicher Art und besitzt beispielsweise eine Anschlußdose 5 für ein Ladekabel 6 zur Zufuhr von Ladestrom zum Fahrzeug 3. Die Ladestation 4 wird über ein lokales Stromnetz 7 von einem öffentlichen Energieversorgungsnetz 8 stromgespeist.

Jede Ladestation 4 wird von einem Sendeempfänger 9 gesteuert, der ein Elektronikmodul 10 und eine daran angeschlossene Sendeempfangsantenne 11 aufweist. Die Sendeempfangsantenne 11 besitzt eine gerichtete Kommunikationszone 12, welche auf den Bereich des Stellplatzes 2 der jeweiligen Anlage 1 beschränkt ist. Nur in dieser Kommunikationszone 12 bzw. diesem beschränkten Bereich des Stellplatzes 2 kann der Sendeempfänger 9 mit Funkeinheiten 13 kommunizieren (Pfeil 14), die von den Fahrzeugen 3 mitgeführt werden.

Jede Funkeinheit 13 ist für das jeweilige Fahrzeug 3 individuell, d.h. mit einer fahrzeugspezifischen Identifikation (Kennung) ausgestattet, welche im Zuge der Kommunikation 14 mit dem Sendeempfänger 9 ausgetauscht werden kann und das Fahrzeug 3 gegenüber der Anlage 1 identifiziert.

Bevorzugt sind die Funkeinheiten 13 fahrzeugfeste Onboard-Units (OBUs), wie sie auch im Rahmen herkömmlicher drahtloser Straßenmautsysteme Verwendung finden und beispielsweise von Funkbaken am Straßenrand abgefragt werden können, um eine Straßen- oder Parkplatzbenützung zu vergebühren. Derartige Straßenmautsysteme arbeiten beispielsweise nach dem DSRC-Standard (Dedicated Short Range Communication) oder WAVE-Standard (Wireless Access in a Vehicle Environment). Demgemäß sind die Funkeinheiten 13 insbesondere DSRC- oder WAVE-OBUs und der Sendeempfänger 9 hat etwa dieselbe Funktionalität wie eine DSRC- oder WAVE-Bake eines Straßenmautsystems.

Über eine Datenleitung 16 steht der Sendeempfänger 9 bzw. sein Elektronikmodul 10 mit anderen Anlagen 1, einem lokalen Netzwerk und/oder einer Zentrale des Straßenmautsystems (nicht dargestellt) in Verbindung.

Der Sendeempfänger 9 steuert die Ladestation 10 in Abhängigkeit von der Kommunikation 14 mit einer Funkeinheit 13, die sich in seiner Kommunikationszone 12 befindet. Durch entsprechende Programmierung des Elektronikmoduls 10 kann gewährleistet werden, daß die Ladestation 4 nur dann zum Laden des Fahrzeugs 3 freigeschaltet wird, wenn sich das Fahrzeug 3 über seine Funkeinheit 13 entsprechend ausgewiesen bzw. angemeldet hat und dadurch die Abrechnung des Ladevorgangs sichergestellt ist. Die Abrechnung kann z.B. über einen Prepaid-Account, der in der Art einer elektronischen Geldbörse in der Funkeinheit 13 gespeichert ist, oder über einen Postpaid-Account, der in einer Zentrale des Straßenmautsystems geführt wird, erfolgen. Zu diesem Zweck können auch entsprechende Transaktionen über die Datenleitung 16 abgesetzt werden.

An das Elektronikmodul 10 ist eine auf den Stellplatz 2 gerichtete Kamera 15 angeschlossen. Die Ladestation 4 überwacht den Ladevorgang und veranlaßt bei jedweder Unterbrechung, Störung und/oder jedweder Abweichung des Ladevorgangs von einem vorgegebenen Verlauf, z.B. einem vorgegebenen Ladestrom- oder Ladespannungsbereich oder einer vorgegebenen Ladekennlinie, über das Elektronikmodul 10 eine Bildaufnahme der Kamera 15. Wenn ein abgeschirmtes Ladekabel 6 verwendet wird, können Störungen in der Abschirmung des Ladekabels elektrisch detektiert werden und so Manipulationen am Ladekabel bereits ansatzweise erkannt werden. Optional kann auch am Beginn und am Ende eines jeden Ladevorgangs eine Bildaufnahme der Kamera 15 für Beweiszwecke durchgeführt werden. Die Bildaufnahmen der Kamera 15 können zusammen mit weiteren Daten der Anlage 1 über die Datenleitung 16 an entsprechende Auswerteeinrichtungen, z.B. die Zentrale eines Straßenmautsystems, gesandt werden.

Fig. 2 zeigt eine alternative Ausführungsform der Anlage 1, wobei gleiche Bezugszeichen gleiche Elemente bezeichnen. Bei dieser Ausführungsform ist für mehrere Anlagen 1 ein einziger Sendeempfänger 9 mit einer größeren Kommunikationszone 12 vorgesehen, die mehrere Stellplätze 2 abdeckt. Mit anderen Worten ist hier die Kommunikationszone 12 nicht auf den Bereich eines Stellplatzes 2 beschränkt. Stattdessen ist der Sendeempfänger 9, z.B. durch entsprechende Ausbildung seiner Sendeempfangsantenne 11, dafür ausgebildet, den Ort P einer Funkeinheit 13 in der Kommunikationszone 12 zu lokalisieren, sodaß auch hier eine eindeutige Zuordnung zwischen einer Funkeinheit 13 und einem Stellplatz 2 der Anlage 1 vorgenommen werden kann.

Für die Lokalisierung des Ortes P kann jede in der Technik bekannte Technologie eingesetzt werden, beispielsweise Laufzeitmessungen, Triangulationsverfahren oder der Empfang von autarken Positionsmeldungen der Funkeinheiten 13, z.B. wenn sich diese mittels Satellitennavigation od.dgl. selbst lokalisieren können.

Für jeden Stellplatz 2 kann eine eigene Kamera 15 vorgesehen werden, oder mehrere Stellplätze 2 können sich eine gemeinsame Kamera 15 teilen.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Anlage zum elektrischen Laden von Fahrzeugen (3), denen individuelle, jeweils mit einer fahrzeugspezifischen Identifikation ausgestattete, fahrzeugfeste Funkeinheiten (13) zugeordnet sind, **gekennzeichnet durch** die Kombination aus
einer Mehrzahl von Stellplätzen (2) für je ein Fahrzeug (3),
für jeden Stellplatz (2) jeweils einer Ladestation (4) zum kabelgebundenen Laden eines darauf befindlichen Fahrzeugs (3) über ein Ladekabel (6), und
für jeden Stellplatz (2) jeweils einem mit dessen Ladestation (4) in Verbindung stehenden Sendeempfänger (9), welcher die Ladestation (1) des Stellplatzes (2) abhängig von einer Kommunikation (14) mit der Funkeinheit (13) eines darauf befindlichen Fahrzeugs (3) unter Austausch der genannten Identifikation für den Ladevorgang freischaltet,
wobei jeder Sendeempfänger (9) eine auf den Bereich seines Stellplatzes (2) beschränkte Kommunikationszone (12) hat.

2. Anlage nach Anspruch 1, **dadurch gekennzeichnet, daß** der Sendeempfänger (9) in der Art einer Funkbake zur Kommunikation mit Funkeinheiten (13) ausgebildet ist, die fahrzeugfeste OBUs eines drahtlosen Straßenmautsystem sind.

3. Anlage nach Anspruch 2, **dadurch gekennzeichnet, daß** der Sendeempfänger (9) eine DSRC- oder WAVE-Bake zur Kommunikation mit DSRC- oder WAVE-OBUs (13) ist.

4. Anlage nach einem der Ansprüche 1 bis 3, **dadurch gekennzeichnet, daß** die elektrischen Ladeparameter des Ladevorgangs auf Grundlage von Daten gesteuert sind, die der Sendeempfänger (9) aus der Funkeinheit (13) ausliest.

5. Anlage nach einem der Ansprüche 1 bis 4, **dadurch gekennzeichnet, daß** sie mit einer auf den Stellplatz (2) gerichteten Kamera (15) ausgestattet ist und die Ladestation (4) am Anfang und am Ende des Ladevorgangs die Kamera (15) zur Bildaufnahme ansteuert.

6. Anlage nach einem der Ansprüche 1 bis 5, **dadurch gekennzeichnet, daß** sie mit einer auf den Stellplatz (2) gerichteten Kamera (15) ausgestattet ist und die Ladestation (4) bei einer Unterbrechung, Störung oder Abweichung des Ladevorgangs von einem vorgegebenen Verlauf die Kamera (15) zur Bildaufnahme ansteuert.

7. Anlage nach Anspruch 6, **dadurch gekennzeichnet, daß** die Ladestation (4) ein geschirmtes Ladekabel (6) zum Anschluß des Fahrzeugs (3) aufweist und bei einer Störung der Abschirmung des Ladekabels die Kamera (15) zur Bildaufnahme veranlaßt.

8. Anlage nach einem der Ansprüche 2 bis 7, **dadurch gekennzeichnet, daß** sie Transaktionen über Ladevorgänge an eine Zentrale des Straßenmautsystems sendet.
